# EUROPEAN PATENT APPLICATION

(11) **EP 0 942 224 A1**
(43) Date of publication of application: **15.09.1999**
(21) Application number: 99104644.2
(22) Date of filing: 09.03.1999
(51) Int. Cl.: F21M 3/22, B60Q 1/14

(54) **Headlight for motor vehicles**

(30) Priority: 10.03.1998 IT TO980197
(71) Applicant: MAGNETI MARELLI S.p.A., 20145 Milano (IT)
(72) Inventor: Dalmasso, Maria Teresa, 10048 Vinovo (IT); Scavo, Gennaro, 10142 Torino (IT); Mantello, Maurizio, 10143 Torino (IT)
(74) Representative: Eccetto, Mauro

(57) **Abstract**

The headlight (1) comprises a reflector (2) defined by a cup-like body having an optical axis (3), with a bulb (12) housed inside the reflector (2) and aligned with the optical axis (3), a masking screen (18) secured to the reflector (2) and located below the bulb (12) and a movement means (6) to move the bulb (12) from a first position, in which the screen (18) faces the emitting zone of the bulb (12a) and allowing the interception of part of the light emitted by the bulb (12), to obtain on exit from the headlight (1), a full beam of light, and in a second position in which the screen (18) is axially at a distance from the bulb and does not intercept the emitted light, allowing the headlight (1) to emit a full beam of light.

## Description

The present invention relates to a headlight for motor vehicles.

Headlights at present fitted to motor vehicles ensure the full beam and dipped light functions by means of a twin filament halogen bulb and an essentially bi-focal optic, or by means of two mono-filament bulbs with separate optics. In the first case the headlight comprises a bi-focal reflector which along its optical axis, and specifically matching the focuses, the two filaments of the bulb are located allowing alternate activation; a dimming screen located facing one of the two filaments, is designed to intercept part of the light emitted by the said filament in order to obtain on output from the headlight, a dipped beam type light complete with the relative "cut-off" (meaning to say the relative demarcation line of clear/dark), whereas the light emitted by the second filament is used entirely to generate a full beam of light. In the second case two separate reflectors are provided, each with a mono-filament bulb and they are arranged so as to obtain respectively a full beam of light and a dipped beam of light.

Each of the two solutions described above requires a compromise of simplicity, economy and space.

The purpose of the present invention is to achieve a headlight for motor vehicles which will be simultaneously simple, economical and requiring reduced space.

According to the present invention a headlight for motor vehicles is achieved comprising a reflector having an optical axis and housing within a concavity defined thereby, a first source of light located in whatsoever manner in a first position and able to provide light to generate a dipped beam light demarcated below by a clear/dark line, and a second light source arranged in whatsoever manner in a second position and able to provide light to generate a dipped beam of light, characterised by the fact that the said full beam and dipped beam light sources are made up from a single filament bulb in the event of the wish to use a halogen source or by a gas discharge bulb and whereby the said headlight comprises movement means allowing the said bulb to be moved from the said first position, in which it defines the said light source, into the second position, in which it defines the second source of light, and vice versa.

The headlight in the present invention has the advantage of achieving the full beam and dipped beam functions by means of a single mono-filament bulb and a bi-focal optic. The solutions as proposed are simple and economical, and require for the structure a minimum of space.

For a better understanding of the present invention a number of forms of preferred implementation will be described, exclusively as a non-restrictive example, by reference to the appended drawings, wherein:
- figure 1 is a view in longitudinal section of the headlight according to the present invention, in a first operating condition in which the headlight operates in dipped beam;
- figure 2 illustrates the same view with the headlight in a second operational condition in which it operates in full beam;
- figure 3 shows a view in longitudinal section of a variation on the headlight in figure 1, in a first operational condition in which the headlight operates in dipped beam condition; and
- figure 4 shows the headlight in figure 3 in a second operational condition in which it operates in full beam condition.

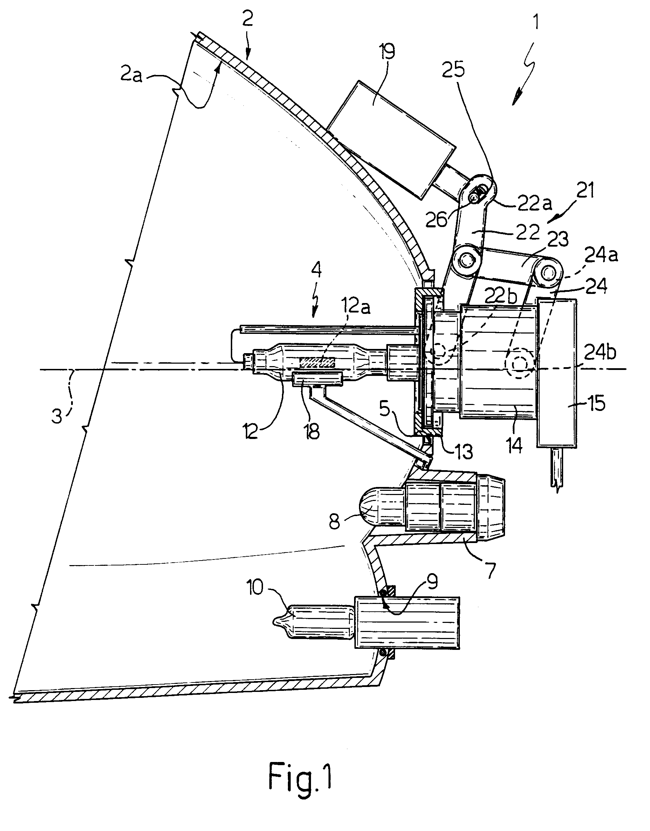

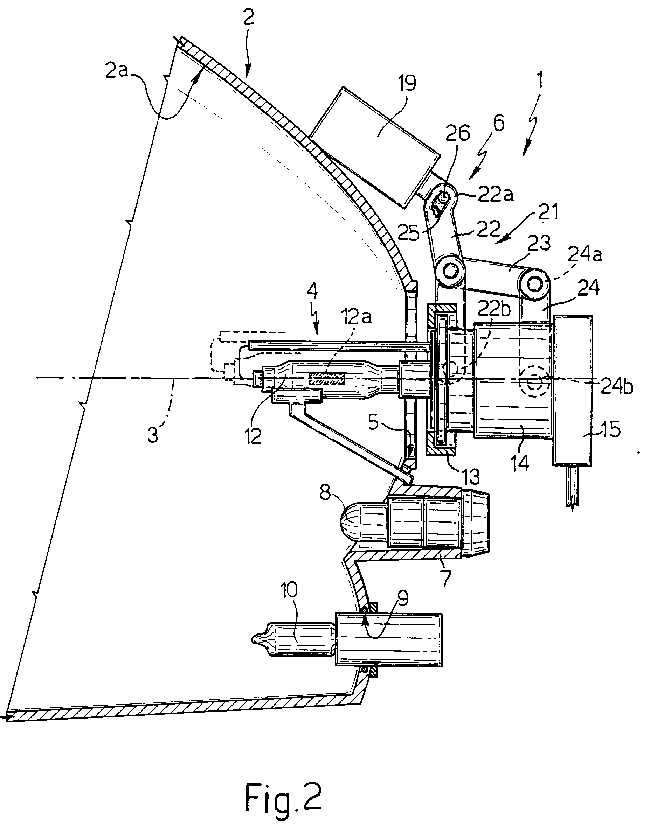

With reference to figures 1 and 2 the arrangement shows under reference 1, a headlight for motor vehicles comprising in its essential parts, a reflector 2 having an optical axis 3, a bulb/socket block 4 and a movement arrangement 6, able to move the bulb/socket block 4 from a first and a second position shown respectively in figures 1 and 2; when the bulb/socket block 4 is in the first position (figure 1), the headlight 1 is able to emit a dipped beam of light, whereas when the bulb/socket block 4 is in the second position (figure 2), the headlight is able to emit a full beam of light.

The reflector 2 has a reflecting surface 2a and below it, a tubular portion 7 able to house a low power bulb 8 to generate the side lights, and an opening 9 able to house a bulb 10 to generate the side flashing lights.

The bulb/socket block 4 extends through a circular aperture 5 made in the rear part of the reflector 2 and comprises: a bulb 12, in particular a halogen bulb with a single filament 12a or a gas discharge bulb, located in side the cavity defined by the reflector 2; an essentially annular shaped socket slide 13, arranged coaxial with the axis 3 and having an external diameter slightly smaller than the diameter of the aperture 5; and a support body 14 of essentially cylindrical shape and coaxial with the axis 3, supporting to the rear the lamp 12 as well as the slide 13.

The bulb/socket block 4 finally comprises an electrical connection means 15 mounted on the rear of the support means 14.

The reflector 2 carries integrally a masking screen 18 (of known type), which is located in fixed position below the bulb 12. In particular, the screen 18 is located in such a position that when the bulb 12 is in the aforesaid first position (figure 1), it faces the emission zone 12a; in consequence when the bulb emits light, the screen 18 intercepts part of the said light and on the exit from the headlight 1 a dipped beam light is obtained, concentrated beneath a clear/dark ("cut-off") demarcation line; vice versa, when the bulb 12 is in the said second position (figure 2), the screen 18 is axially at a distance from the bulb and the whole of the light emitted reaches the reflector 2, of which the optic is designed to generate in that position of the light source, a full beam of light.

The movement arrangement 6 is located on the outside of the reflector 2 and is actuated in a manner not shown here, by the driver of the motor vehicle; it comprises an actuator 19 and a lever assembly kinetic mechanism 21 located between the output component of the linear actuator 19 and the bulb/socket block 4.

The kinetic mechanism 21 comprises as shown in figure 1, a first lever 22, a con-rod 23, and a second lever 24. A first end 22a of the first lever 22 has a button-hole 25, which is retained by a cylindrical pin 26 integral with the output component of the linear actuator 19, whereas a second end 22b of the first lever 22 is hinged from the slide means 13. The con-rod 23 connects the first lever 22 to a first end 24a of the second lever 24, whereas a second end 24b of the second lever 24 is hinged from the support body 14 (parallel forces system).

The movement arrangement 6 is designed to pass from a dipped beam state (figure 1), in which the output organ of the actuator 19 is at rest and the first and second levers 22, 24 are directed obliquely to the axis 3, into a full beam state (figure 2), in which the output organ of the linear actuator 19 is reversed and the first and second lever 22, 24 are arranged perpendicularly to the axis 3.

The operation of the headlight 1 is as outlined below.

It is assumed initially, that the movement arrangement 6 is in the aforesaid dipped beam state (figure 1) and that in consequence, the bulb 12 is in the aforesaid first position, with the light emitting zone 12a facing the screen 18; in that condition, the headlight 1 will generate a dipped beam light.

To move to the full beam operation, the movement arrangement 6 is actuated in such a manner as to pass into the full beam condition (figure 2). The actuator 19 thus exerts a pressure on the first lever 22, causing the inclination either of the first lever 22 or (by actuation of the con-rod 23) of the second lever 24; in consequence, the first lever 22 exerts with its second end 22b, a pressure on the slide 13 which is translated into a shift of the bulb/socket block 4 towards the second position. In that position the emitting zone 12a is no longer facing the masking screen 18 and the whole of the light emitted by it contributes towards the generation of the full beam light. The transition from full beam operation to dipped beam operation obviously occurs in a manner opposing the previous one.

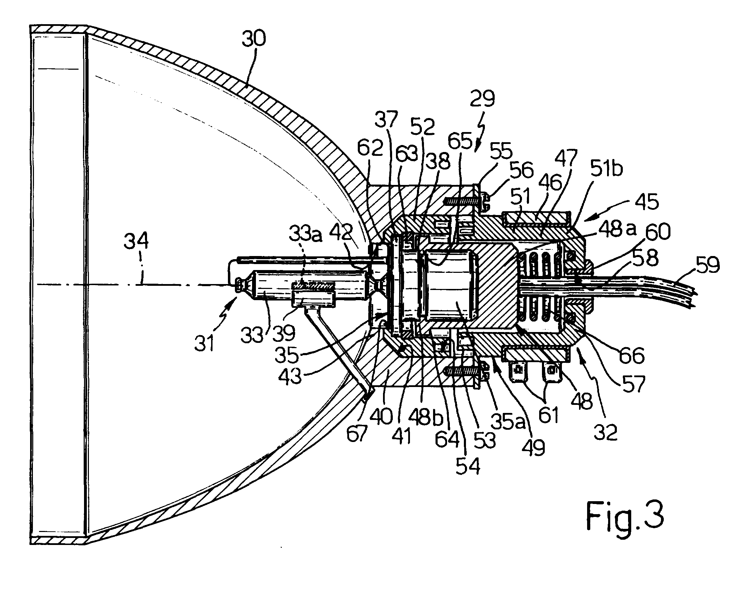

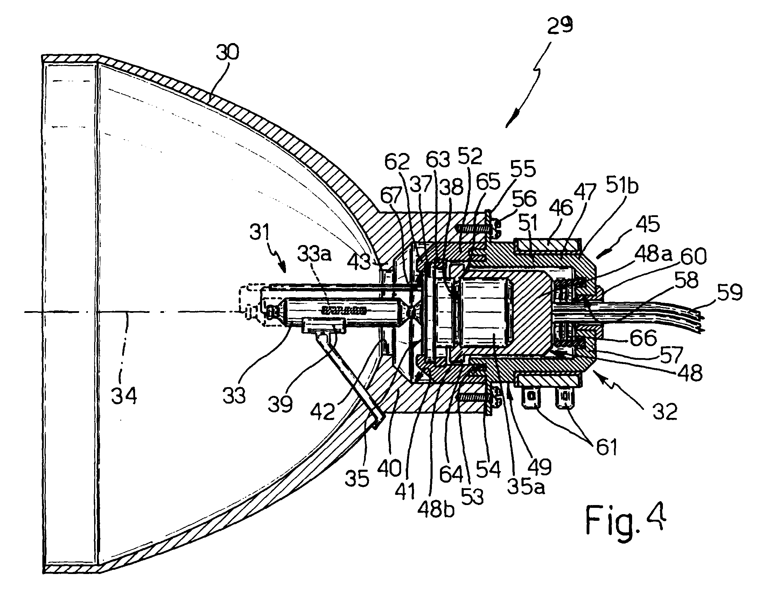

Referring to figure 3, a headlight for motor vehicles is shown under reference 29 of a different design compared with headlight 1, but also comprising as essential components, a reflector 30, a bulb/socket block 31 and a movement arrangement 32 for the latter. The main differences compared with headlight 1 occur within the movement arrangement which in the case of headlight 29, is of the electro-magnetic type and occurs exclusively along the horizontal axis, while the movement arrangement 32 defines the axial shift of the bulb/socket block 31 from a first position (figure 3) in which the headlight 29 operates on dipped beam, and a second position (figure 4) in which the headlight 29 operates on full beam.

The bulb/socket block 31 is on the other hand similar to that in figure 1 and comprises a halogen bulb 33 with a single filament 33a (or a xenon bulb) and located along an optical axis 34 of the reflector 30 and a support body 35 supporting the bulb 33 from the rear. The support body 35 is essentially cylindrical and has at the front an annular flange 37 and at the centre an annular groove 38.

The reflector 30 carries an integral masking screen 39, which is located below the bulb 33 in such a position that when the bulb 33 is in the first position (figure 3), it faces the emitting zone of the bulb 33a and intercepts part of the emitted light, whereas when the bulb 33 is in the second position (figure 4), it is axially at a distance from the bulb and does not intercept the emitted light. The headlight 29 operates in both cases for dipped beam and respectively full beam purposes.

The reflector 30 also comprises at the rear, a tubular coupling and guiding portion 40, which has on the inside a cylindrical hole 41, communicating with the inside of the reflector 30 by way of a circular aperture 42 coaxial with the axis 34.

The aperture 42 has a smaller diameter than the hole 41 and is demarcated radially by the internal edge of an annual wall 43, which axially demarcates the hole 41. The movement arrangement 32 comprises an electro-magnetic actuator 45 consisting in its main components, of an electro-magnet 46, a yoke 47 and an armature 48.

The yoke 47 is defined by the rear portion of an envelope 49 of essentially cylindrical shape and made of ferromagnetic material, consisting of a first and of a second cup-like body 51, 52, coaxial with the axis 34 and having facing cavities. In particular the first cup body 51 has the cavity turned towards the reflector 30 and comprises a front portion 51a of an external diameter approximately similar to the internal diameter of the hole 41 and a rear portion 51b of a smaller diameter defining the yoke 47.

The first cup-like body 51 has at the front, an axial collar 53 designed to engage an axial annual channel 54 formed in the second cup body 52 to achieve guided coupling of the two cup-like bodies 51 and 52. The front portion 51a also has an external annular flange 55, which is secured by means of screws 56 to the tubular portion 40 of the reflector 30. The rear portion 51b is demarcated by a base wall 57 having a hole 58 to allow access for the electrical wiring 59 to the bulb 33. An insulating material annular cover component 60 closes the hole 58 and insulates the wiring 59 from the envelope 49.

The second cup body 52 has an outer diameter equal to that of the first cup-like body 51, an internal diameter greater than that of the first cup body 51 and mounted to slide inside the hole 41. In addition the second cup body 52 is integrally connected with the support body 35 of the bulb/socket block 31. In effect the second cup body 52 has an annular base wall 62 and a locking ring 63 mounted on the inside, between which the flange 37 is mounted. The base wall 62 radially demarcates an aperture 67, which has approximately the same diameter as the aperture 42 of the reflector 30 and allows the bulb 33 to project from the envelope 49.

The electromagnet 46 is defined by a coil wound around the said yoke 47, designed to receive electric power, in a known manner and not illustrated, by way of two electrodes 61 and to generate in consequence a magnetic field of which the flux lines extend essentially in parallel direction with the axis 34.

The armature 48 is defined by a metal cup body, housed inside the envelope 49 and in turn housing a rear portion 35a of the support body 35. In the presence of the magnetic field, the armature 48 is subject to attraction towards the wall 57 to bring the bulb/socket block 31 into the first position.

The armature 48 comprises a rear portion 48a housed inside the first cup body 51 and a front portion 48b extending inside the second cup body 52. The front portion 48b has an external annular projection 64, with an external diameter greater than the internal diameter of the first cup body 51 and the locking ring 63. In addition, the front portion 48a has in opposition to the annular projection 64, an internal annular end 65, engaging the channel 54 in the support body 35 to achieve axial coupling with the support body 35.

The movement arrangement 32 comprises in addition to the electro-magnetic actuator 45, a compression spring 66, mounted between the base wall 57 of the first cup body 51 and the rear portion 48a of the armature 48, and able to react in opposition to the electro-magnetic actuator 45 to push the armature 48 and thereby, the bulb/socket block 31, towards the second position.

The operation of the headlight 29 is as follows. It is assumed that the electro-magnet 46 is initially energised, so as to bring the bulb 33 into the first position, or retract it in relation to the masking means 39 and the headlight 29 thus operating as a dipping means. Should the electro-magnet 46 be de-energised, the attraction of the armature 48 towards the wall 57 ceases, and the spring 66 pushes the armature 48, and thereby the bulb/socket block 31 towards the second position in which the emitting zone of the bulb faces the masking screen 39 and the headlight thus operates in full beam mode. To resume operation in dipped beam, it suffices to re-energise the electro-magnet 46 to move the lamp 33 once more into its first position.

It will finally be seen that the headlights described and illustrated here will allow further modifications and variations without departing from the protective scope of the present invention.

## Claims

1. Headlight for motor vehicles comprising a reflector (2; 30) having an optical axis (3; 34) and housing inside a cavity defined thereby, a first light source located in a first position and designed to provide light by the generation of a full beam light, and a second light source located in a second position and able to provide light for generating a dipped beam of light, characterised by the fact that the said full beam and dipped beam light sources are provided by a bulb (12; 33) with a single filament (12a; 33a) or gas discharge and that the said headlight (1; 29) comprises movement means (6; 32) designed to transit the said bulb (12; 33) from the first position, in which it defines the said light source, to the said second position, in which it defines the said second light source, and vice versa.

2. Headlight according to claim 1, characterised in that it comprises a fixed masking screen (18; 39) integral with the reflector (2; 30), located facing the bulb (12; 33) when the bulb (12; 33) is located in the said first position, to intercept part of the light emitted by the said bulb (12; 33) and allow generation at the output of the said headlight (1; 29), of the said full beam light.

3. Headlight according to claim 1 or 2, characterised in that it comprises support means (13, 14) for the said bulb (!2) and the fact that the said movement means (6) comprise actuating means (19) and movement transmission means (21) interposed between the said actuator means (19) and the said support means (13, 14).

4. Headlight according to claim 3, characterised in that the said movement transmission means (21) comprise at least a kinetic lever assembly arrangement (21).

5. Headlight according to claim 4, characterised in that the said kinetic lever arrangement (19) comprises a first lever (22) having a first end (22a) integral with an output organ of the said actuator means (19) and a second end (22b) cooperating with the said support means (13, 14), and second lever (24) presenting a first end (24a) cooperating with the said support means (13, 14), and a con-rod (21) connecting the said first lever (22) to a second end (24b) of the said second lever (24).

6. Headlight according to claim 1 or 2, characterised in that the said movement means (32) comprise an electromagnetic actuator (45) to move the said bulb (33) from an initial position, coinciding with one of the first and second positions, to a final position, coinciding with the other of the said first and second positions, and contrast flexible means (66) to move the said bulb (33) into the said initial position when the said electro-magnetic actuator (45) is de-energised.

7. Headlight according to claim 6, characterised in that the said electro-magnetic actuator (45) comprises means generating a magnetic field (46), means confining the magnetic field (47) integral with the said reflector (30) and supporting the said magnetic field generation means (46), and kinetic effect movable means (48) integrally connected with the said support means (35) and moving along the said axis (34).

8. Headlight according to claim 7, characterised in that the said magnetic field confining means (47) define a portion (51a) of an envelope (49) housing the said magnetic effect moving means (48).

9. Headlight according to claim 8, characterised in that the said reflector (30) comprises a rear portion (40) defining within it a hole (41) communicating with the inside of the said reflector (30); the said envelope (49) comprising a first and a second cup-like body (51, 52) having facing cavities, the said first cup body (51) presenting a cavity turned towards the said reflector (30) and being integrally connected with the rear portion (40); the said second cup-like body (52) being mounted to slide inside the said hole (41) and being integrally connected with the said support means (35).
